# EUROPEAN PATENT APPLICATION

(11) **EP 4 762 930 A1**
(43) Date of publication of application: **24.06.2026**
(21) Application number: 25218069.0
(22) Date of filing: 24.11.2025
(51) Int. Cl.: A21D 13/32, A21C 15/00, A21D 13/38, A21C 15/02, A21D 13/24, A21D 13/28

(54) **METHOD AND APPARATUS FOR PRODUCING A FILLED BISCUIT**

(30) Priority: 17.12.2024 IT 202400028722
(71) Applicant: Soremartec S.A., 2633 Senningerberg (LU)
(72) Inventor: MOLLO, Marco, L-2633 Senningerberg (LU); ARAGONE, Giovanni, L-2633 Senningerberg (LU); SANTUCCIONE, Francesco Antonio, L-2633 Senningerberg (LU)
(74) Representative: Buzzi, Notaro & Antonielli d'Oulx S.p.A.

(57) **Abstract**

A method for producing a filled biscuit (100) is described, comprising the steps of:
- providing a biscuit body (2) and advancing the biscuit body along a feed path (K);
- dispensing at least one filling layer (4, 6) onto the biscuit body (2), wherein

the dispensing of the filling layer includes an extrusion operation performed by means of an extrusion head (20) comprising an extrusion slot (24), wherein the filling is extruded through the extrusion slot (24) in the form of a layer having a predetermined width and thickness and is deposited onto said biscuit body (2) while the latter moves relative to said extrusion head (20) along said feed path (K);
optionally, providing a second biscuit body (8) and disposing it on the at least one filling layer (4, 6), said at least one filling layer (4, 6) being interposed between said first biscuit body (2) and said second biscuit body (8).

## Description

The present invention relates to a method for producing a filled biscuit comprising a biscuit body and a filling layer deposited on the biscuit body.

In a preferred application, the method described herein is arranged to produce a filled biscuit of the so-called "sandwich" type, i.e., comprising a first biscuit body, a second biscuit body, and one or more filling layers interposed between the first biscuit body and the second biscuit body.

Known methods for producing a filled biscuit of the type indicated above are numerous and may, for example, involve dosing the filling by means of dispensing heads provided with nozzles that deposit a predetermined amount of filling onto the biscuit body, or the application of a pre-formed layer of filling, usually a disk, onto the biscuit body, which is made by means of a forming device. A further type of known method involves the use of at least one rotating roller whose outer mantle is covered with a continuous layer of filling which is then transferred onto the succession of biscuits passing beneath the roller.

However, the known processes suffer from some drawbacks.

For example, dosing through nozzles of a dispensing head requires the use of a low-viscosity filling free of inclusions.

Forming devices, on the contrary, require a very viscous filling, capable of maintaining the shape with which it is molded by the forming device.

The aforementioned rotating roller, instead, releases the filling layer indiscriminately both onto the biscuits and onto the conveyor by which they are carried, thus soiling the conveyor as well as the lateral edges of the biscuits, in particular the edges on the front and rear ends of the biscuits, with reference to their direction of advance.

In this type of known solution with a rotating roller, the filling released onto the conveyor is collected to be recirculated. In applications where multiple rotating rollers are provided to apply different fillings, it may happen that in the recirculation of one filling, residues of a previously applied filling also end up, for example residues that initially deposit on the lateral edges of the biscuits and are then randomly released in the recirculation zone of the second filling. This causes the composition of the recirculated second filling to be altered, thus causing problems for the product quality both from an aesthetic point of view and from the point of view of its organoleptic properties.

Finally, in a solution with a rotating roller, necessarily all the biscuits transported by the conveyor passing beneath the roller receive a layer of filling, so it is not possible to differentiate the application of the filling among the different biscuits transported by the conveyor in question.

This limitation reduces the variety of filled biscuits that can be produced by the line, or, alternatively, considerably complicates the configuration of the line for the production of those varieties of filled biscuits for which said differentiation is necessary.

Furthermore, the aforementioned modes of applying the filling are not very versatile and, in particular, make it difficult to adapt the process to any modifications of the biscuit to be produced, for example, in relation to the type of fillings or the configuration of the layers to be made with them.

It is in fact often necessary to completely revise the process setup even just following a request for a new thickness of the filling layers or the adoption of a filling characterized by different fluid dynamic behavior, which is usually done through numerous production tests.

In this context, the present invention proposes a solution capable of overcoming the drawbacks discussed above.

In general, the present invention relates to a method for producing a filled biscuit according to claim 1 and an apparatus for producing a filled biscuit according to claim 10.

The claims form an integral part of the teaching provided herein.

Further characteristics and advantages of the present invention will be apparent from the following description with reference to the accompanying drawings, provided by way of non-limiting example only, in which:
- figure 1 schematically represents an example of the method and system described herein;
- figures 2A, 2B and 2C represent a filling extrusion head of the system described herein in different operational states;
- figure 3 illustrates an example of a filled biscuit made by the method and system described herein.

In the following description, various specific details are illustrated for a thorough understanding of the embodiments. The embodiments can be made without one or more of the specific details, or with other methods, components or materials etc. In other instances, known material structures or operations are not shown or described in detail to avoid obscuring various aspects of the embodiment.

The references used herein are for convenience only and thus do not define the scope of protection or the scope of the embodiments.

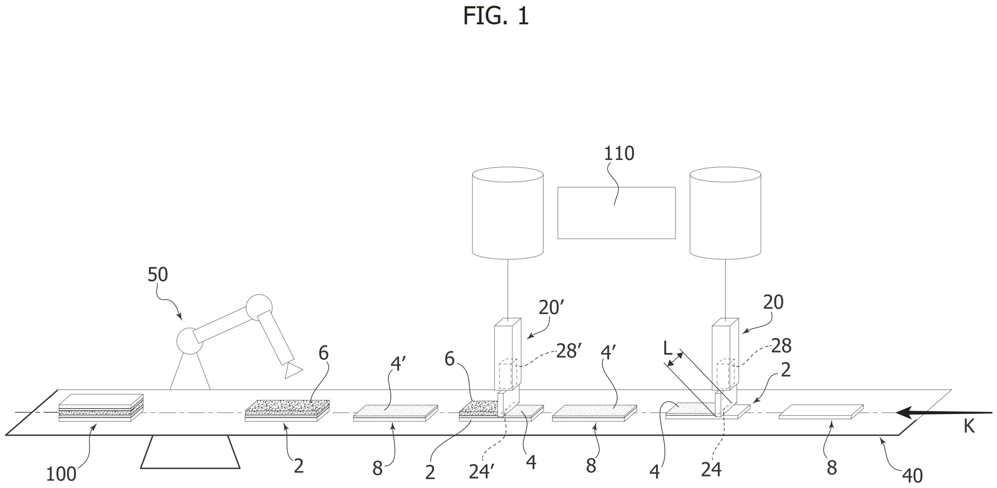

With reference to figure 1, the method described herein comprises the steps of:
- providing a biscuit body 2 and advancing the biscuit body along a feed path K; and
- dispensing at least one filling layer 4 onto the biscuit body 2.

According to an important characteristic of the solution described herein, the dispensing of the filling layer 4 is performed according to an extrusion operation executed by an extrusion head 20 comprising an extrusion slot 24.

In one or more preferred embodiments, as illustrated, the extrusion operation involves the filling being extruded through the slot 24 in the form of a layer having a predetermined width and thickness, which is deposited onto the biscuit body 2 while the latter moves relative to the extrusion head 20 along the feed path K.

The filling layer thus deposited onto the biscuit body 2 constitutes the aforementioned filling layer 4.

Preferably, the deposited filling layer 4 has a planar geometry, i.e., it has two planar major faces, opposite and parallel to each other.

Preferably, the extrusion slot 24 is arranged with its longitudinal dimension oriented transversely to the feed path K.

The width of the deposited filling layer 4 is determined by the length L of the extrusion slot 24 (Figure 1).

On the other hand, the thickness of the deposited filling layer 4 is regulated by means of a coordinated control of the flow rate of the filling dispensed through the slot 24 and the speed of the relative movement between the extrusion head 20 and the biscuit bodies 2.

Preferably, the dispensing speed of the filling through the extrusion slot 24 is substantially equal to the speed of the relative movement between the extrusion head 20 and the biscuit body 2 along the feed path K.

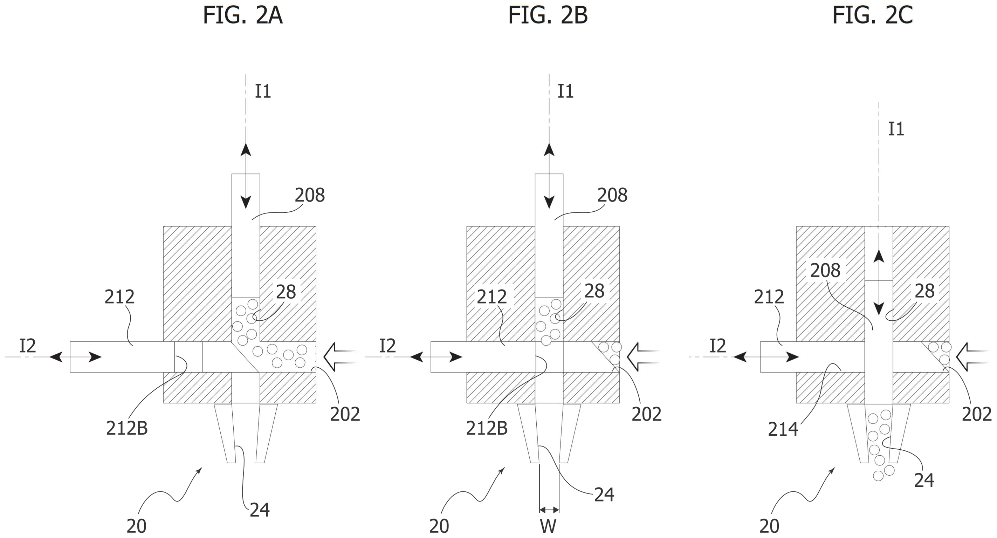

In a preferred application, the aforementioned control is set so that the thickness of the filling layer 4 substantially corresponds to the width W of the extrusion slot 24 (figure 2B).

In one or more preferred embodiments, as illustrated, the biscuit body 2 advances along the feed path K, carried by a conveyor 40, for example a conveyor belt.

In one or more preferred embodiments, as illustrated, the extrusion head 20 is disposed above the conveyor 40 in order to deposit the filling layer 4 onto the biscuit body 2.

During the extrusion operation, the extrusion head 20 and the biscuit body 2 move relative to each other along the feed path K, and the dispensing head 20 deposits the extruded filling through its slot 24 onto the upper side of the biscuit body 2, distributing the filling uniformly.

To achieve said relative movement, the extrusion head 20 can remain stationary in an operational position while the biscuit body 2 advances along the feed path K, transported by the conveyor 40, or, in an alternative embodiment, the extrusion head 20 can itself move along the feed path K, preferably at a speed greater than the speed of the biscuit body 2.

In one or more preferred embodiments, as illustrated, the extrusion operation includes preloading the filling inside a collection chamber 28 of predefined volume, until the same chamber is completely filled, and extruding all the filling contained inside the collection chamber 28 through the extrusion slot 24, according to the mode indicated above.

This preloading phase of the filling into the collection chamber 28 facilitates the control of the quantity of filling that is dispensed during the single extrusion operation, thus allowing the process to offer greater guarantees that the deposited filling layer 4 conforms to a predetermined configuration.

In general, the extrusion operation indicated above considerably simplifies the application of a filling layer onto the biscuit body, as well as any adaptation necessary to produce other biscuits characterized by different filling layers.

In this regard, it can be noted that the extrusion head 20 is capable of operating correctly with fillings having consistencies that are even very different from each other.

Furthermore, it is sufficient to i) replace the extrusion slot 24 with an extrusion slot of other dimensions and/or ii) replace/modify the collection chamber 28 to provide a different filling collection volume and/or iii) adjust the speed of the relative movement between the extrusion head 20 and the biscuit body 2, to modify the dimensions (in particular the thickness and the width) of the filling layer 4 that is deposited onto the biscuit body 2 during the extrusion operation.

In one or more preferred embodiments, as illustrated, the apparatus described herein may comprise a control unit 110 configured to control the extrusion head 20 and the conveyor 40 in a coordinated manner for the execution of the operation indicated above.

With reference now to figures 2A-2C, in one or more preferred embodiments, as illustrated, the extrusion head 20 comprises:
- an inlet 202;
- a collection chamber 28;
- a piston 208 movable inside the collection chamber 28 along an actuation direction I1.

In particular, the piston 208 is movable according to a suction stroke, in a first direction along the actuation direction I1, for suctioning the filling through the inlet 202 and into the collection chamber 28, and according to an expulsion stroke, in a second direction opposite to the first direction, for dispensing the filling through the extrusion slot 24.

Furthermore, the extrusion head 20 comprises a valve member 212 placed inside a valve seat 214, which is movable between a first condition (figure 2A) wherein the collection chamber 28 is placed in fluid communication with the inlet 202 and is instead separated from the extrusion slot 24, and a second condition (figure 2B) wherein the collection chamber 28 is placed in fluid communication with the extrusion slot 24 and is instead separated from the inlet 202.

In one or more preferred embodiments, as illustrated, the valve member 212 is movable along a direction I2 orthogonal to the direction I1 and comprises a first internal passage 212B arranged to set in mutual communication the extrusion slot 24 and the collection chamber 28, in said second condition (figure 2B).

In an alternative embodiment, the valve member 212 can instead move according to a rotational movement around an axis parallel to the direction I2.

Preferably, the piston 208 and the valve member 212 are actuated by respective actuators (not illustrated) controlled by the control unit 110.

With reference to figures 2A to 2C, the operation of the extrusion head 20 is as follows.

Starting from a condition in which the filling has yet to be preloaded, the valve member 212 is placed in its first condition (figure 2A) wherein the inlet 202 is placed in communication with the collection chamber 28, and the piston 208 is actuated to perform the suction stroke (in a direction away from the valve member 212) to suction the filling through the inlet 202 and accumulate it inside the collection chamber 28.

The collection chamber 28 will have a predefined filling collection volume which is defined by the end position assumed by the piston 208 at the end of its suction stroke.

Incidentally, it will be noted that the volume of the collection chamber 28 can therefore be regulated in a simple and rapid manner by adjusting said end position of the piston 208, for example via the control unit 110.

Subsequently, the valve member 212 is arranged in its second condition (figure 2B) wherein the collection chamber 28 and the extrusion slot 24 are placed in communication with each other.

At this point, the piston 208 is actuated in its expulsion stroke to expel the filling from the collection chamber 28 and cause it to exit through the extrusion slot 24.

Note that the extrusion head 20 can however also have a structure different from the one described above.

Returning to the method described herein, in one or more preferred embodiments, it comprises the step of dispensing a second filling layer 6 onto the first filling layer 4, according to an extrusion operation analogous to that described above with reference to the first filling layer 4.

In one or more preferred embodiments, as illustrated, the dispensing of the second filling layer 6 involves the dispensing of a second filling different from the first filling, and the use of a second extrusion head 20' which differs, primarily, from the extrusion head 20 by the fact of having an extrusion slot 24' of dimensions different from the extrusion slot 24 of the extrusion head 20.

In particular, analogously to what was described above, the extrusion operation of the second filling involves the dispensing of the second filling through the extrusion slot 24' in the form of a layer having a predetermined width and thickness, which is deposited onto the first filling layer 4 while the extrusion head 20' and the biscuit body 2 move relative to each other along the feed path K.

Also in this case, said relative movement can be achieved by keeping the dispensing head 20' stationary while the biscuit body 2 advances along the feed path K, or through a movement of the same extrusion head 20' along the feed path K, preferably at a speed greater than the speed of the biscuit body 2.

In one or more preferred embodiments, as illustrated, the extrusion slot 24' has a width greater than the width W of the extrusion slot 24.

In one or more preferred embodiments, as illustrated, the thickness of the second filling layer 6 is greater than the thickness of the first filling layer 4.

Preferably, the second filling contains inclusions.

The inclusions can for example be formed by one or more of the following ingredients: cereals, dried fruit, raisins, candied fruit, chocolate drops, biscuit or meringue granules, etc..

In some applications the inclusions contained in the second filling can have dimensions even greater than 6 mm.

In one or more preferred embodiments, as illustrated, the process described herein comprises, therefore, providing a second biscuit body 8 and disposing it on the filling layers 4, 6 deposited on the first biscuit body 2, so that the latter are interposed between the two biscuit bodies 2, 8.

In a preferred embodiment, as illustrated, before the second biscuit body 8 is disposed on the filling layers 4, 6, the process described herein provides for depositing a filling layer 4' identical to the filling layer 4, onto what will then become the inner side of the second biscuit body 8 placed above the two filling layers 4, 6 and the biscuit body 2.

In an alternative embodiment, the filling layer 4' can instead be deposited directly above the two filling layers 4, 6, before the second biscuit body 8 is superimposed onto them.

With specific reference to the example illustrated in figure 1, the conveyor 40 transports along the feed path K a continuous series of biscuit bodies 2 and biscuit bodies 8 which alternate with each other.

The extrusion head 20 performs its extrusion operation on all the transported biscuit bodies, to deposit the filling layer 4 onto the biscuit body 2 and to deposit the filling layer 4' onto the biscuit bodies 8.

On the other hand the extrusion head 20' instead performs its extrusion operation only on the biscuit bodies 2, to deposit the filling layer 6 above the filling layer 4 deposited previously on the biscuit bodies 2.

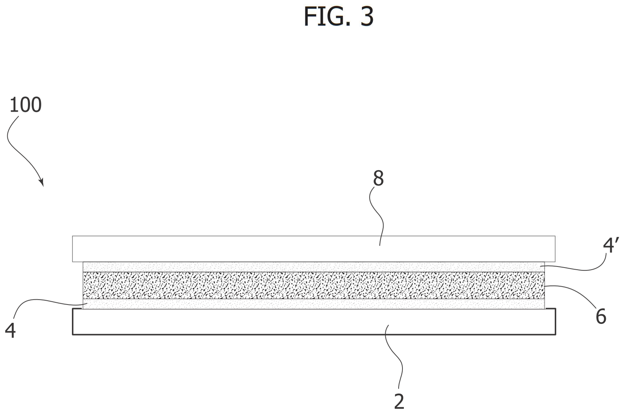

A manipulator device 50 finally provides for disposing the biscuit bodies 8, together with their respective filling layers 4', onto the biscuit bodies 2 and their respective filling layers 4, 6. Figure 3 illustrates the filled biscuit 100 obtained by the method and apparatus described above.

Returning to the prior art solutions described at the beginning, it can be noted how these would not have allowed the production of such a biscuit. With particular reference to the known solution with a rotating roller, it can be observed that this would not have allowed the realization of the alternation of biscuits 2 and 8 illustrated above, for which the biscuits 2 each have the two filling layers 4 and 6, while the biscuits 8 each have exclusively the filling layer 4'.

The known solution with a rotating roller would possibly allow the realization of rows of biscuits all provided with two superimposed filling layers, without the possibility of differentiating the deposition of the filling among the various biscuits. This would therefore lead to the necessity of flipping biscuits provided with a double layer of filling, with all the technical difficulties connected to such an operation, considering the high risk of the filling detaching due to the flipping.

Furthermore, still with reference to a possible use of the known solution with a rotating roller, the addition of inclusions to the filling would be limited only to granular material of small dimensions, given that such inclusions would be deposited together with the filling layer deposited by the rotating roller and could not, therefore, exceed the thickness of that layer, which substantially corresponds to half the thickness of the overall filling layer of the final product.

Finally, the operation of coupling biscuits both provided with a double layer of filling would be much more difficult, if not impossible to implement within an industrial production line, at least in applications where the filling was soft and/or presented filling thicknesses above a certain dimension.

In a preferred embodiment, the two filling layers 4, 4' are constituted by chocolate and have a thickness preferably less than 0.5 mm. Alternatively, the two layers 4 and 4' can instead be constituted by one of the following ingredients: caramel, jam, chocolate substitutes, anhydrous creams, etc.. On the other hand, the filling layer 6 is constituted by a cream containing inclusions and has a thickness not less than 0.5 mm and in any case, if with inclusions, not less than the size of the inclusions themselves.

Incidentally, it is noted that, in this application, the two chocolate layers 4, 4' perform a function of separating the cream layer 6 from the two biscuit bodies 2, 8, preventing certain components of the cream (for example, the fatty or aqueous matrices possibly present in the filling 6) from compromising the consistency and/or the organoleptic properties of the two biscuit bodies 2, 8.

Thanks to the characteristics discussed above of the method and apparatus described herein, the filling layers 4, 6 and 4' precisely respect the predetermined quantities and present a precise and uniform conformation throughout their extent.

With specific reference to figures 2A to 2C, note, furthermore, that each of the extrusion heads 20, 20' used in the method described herein allows to prevent that, after the dispensing of the single filling layer, residues of the filling remain in the respective dispensing slot 24 or 24', this thanks to the suction action that the piston 208 performs during its suction stroke (upward in the example of figures 2A to 2C), immediately after a dispensing of the filling has occurred, and which allows recovering any residues of filling remaining inside the dispensing slot.

In this way, the risk that the production line and the biscuits produced by it are soiled by residues of the filling falling freely from the dispensing head is avoided.

This advantage can certainly constitute an incentive to use ingredients that are usually considered critical from the point of view of the residues they can leave at the end of a dispensing, such as for example caramel, and which for this reason are rarely used in the production of filled biscuits.

In view of the above, the method described herein therefore allows the production of a wide range of filled biscuits, and without the need to make modifications to the apparatus used.

Naturally, the principle of the invention remaining firm, the details of construction and the embodiments may vary, even significantly, with respect to what has been illustrated herein by way of non-limiting example only, without thereby departing from the scope of the invention, as defined by the appended claims.

## Claims

1. Method for producing a filled biscuit (100), comprising the steps of:
- providing a biscuit body (2) and advancing the biscuit body along a feed path (K);
- dispensing at least one filling layer (4, 6) onto the biscuit body (2), wherein
the dispensing of the filling layer includes an extrusion operation performed by means of an extrusion head (20) comprising an extrusion slot (24), wherein the filling is extruded through the extrusion slot (24) in the form of a layer having a predetermined width and thickness and is deposited onto said biscuit body (2) while the latter moves relative to said extrusion head (20) along said feed path (K);
optionally, providing a second biscuit body (8) and disposing it on the at least one filling layer (4, 6), said at least one filling layer (4, 6) being interposed between said first biscuit body (2) and said second biscuit body (8).

2. Method according to claim 1, comprising dispensing a second filling layer (6) onto the at least one filling layer (4), the at least one filling layer identifying a first filling layer (4),
wherein the dispensing of the second filling layer (6) includes a second extrusion operation performed by means of a second extrusion head (20') comprising a second extrusion slot (24'), wherein a second filling different from the first filling is employed and wherein the second filling is extruded through the second extrusion slot (24') in the form of a layer having a predetermined width and thickness and is deposited onto the first filling layer (4) while the biscuit body (2) moves relative to the second extrusion head (20') along said feed path (K).

3. Method according to claim 1 or 2, wherein said extrusion operation and/or said second extrusion operation includes/include preloading the filling inside a collection chamber (28, 28') of the extrusion head (20) or of the second extrusion head (20'), of predefined volume, until the collection chamber (28, 28') is filled, and extruding all the filling contained inside the collection chamber (28, 28') through the extrusion slot (24) or the second extrusion slot (24').

4. Method according to any one of the preceding claims, comprising dispensing a third filling layer (4') onto the second biscuit body (8), by means of an extrusion operation performed by said extrusion head (20), before said second biscuit body is disposed on the at least one filling layer (4, 6).

5. Method according to any one of claims 2 to 4, wherein the second extrusion slot (24') of the second extrusion head (20') comprises a width greater than the width of the extrusion slot (24) of the extrusion head (20).

6. Method according to any one of claims 2 to 5, wherein the first filling layer has a thickness not greater than 0.5 mm.

7. Method according to any one of claims 2 to 6, wherein the second filling layer has a thickness not less than 0.5 mm.

8. Method according to any one of claims 2 to 7, wherein the first and/or the second filling includes/include inclusions.

9. Filled biscuit (100) obtained by a method according to any one of the preceding claims.

10. Apparatus for implementing a method according to any one of the preceding claims, comprising:
- a conveyor (40) for feeding the biscuit body (2) along the feed path (K); and
- at least one extrusion head (20) comprising an extrusion slot (24), for performing an extrusion operation wherein the filling is extruded through the extrusion slot in the form of a layer having a predetermined width and thickness and is deposited onto the biscuit body (2) while the latter moves relative to said extrusion head (20) along said feed path (K).

11. Apparatus according to claim 10, wherein said at least one extrusion head (20) comprises a collection chamber (28) in which the filling is preloaded before being extruded through the extrusion slot (24) during the extrusion operation.

12. Apparatus according to claim 10 or 11, comprising a control unit (110) configured for controlling the extrusion head (20) and the conveyor (40) in a coordinated manner to deposit a filling layer having a predefined thickness.

13. Apparatus according to any one of claims 10 to 12, wherein the at least one extrusion head (20) comprises:
- an inlet (202);
- a collection chamber (28);
- a piston (208), movable inside the collection chamber (28) along an actuation direction (I1), according to a suction stroke, in a first direction along the actuation direction (I1), for suctioning the filling through the inlet (202) and into the collection chamber (28), and according to an expulsion stroke, in a second direction opposite to the first direction, for dispensing the filling through the extrusion slot (24);
- a valve member (212), placed inside a valve seat (214), which is movable between a first condition wherein the collection chamber (28) is placed in fluid communication with the inlet (202) and is instead separated from the extrusion slot (24), and a second condition wherein the collection chamber (28) is placed in fluid communication with the extrusion slot (24) and is instead separated from the inlet (202).
